# EUROPEAN PATENT APPLICATION

(11) **EP 1 167 089 A2**
(43) Date of publication of application: **02.01.2002**
(21) Application number: 01830376.8
(22) Date of filing: 08.06.2001
(51) Int. Cl.: B60C 25/138

(54) **Apparatus for mounting tyres with anti-puncture inserts**

(30) Priority: 12.06.2000 IT FI000136; 05.09.2000 IT FI000187
(71) Applicant: Puliti, Umberto, 50124 Calenzano (Firenze) (IT)
(72) Inventor: Puliti, Umberto, 50124 Calenzano (Firenze) (IT)
(74) Representative: Martini, Lazzaro

(57) **Abstract**

Apparatus for mounting tyres with antipuncture inserts, to be used for providing a tire (5) with an antipuncture insert (6) and intended to cooperate with a turning platform (1) having means for fixing a rim and means (3, 30) for associating a tire (5) with the rim (2) being fixed to the platform (1), apparatus characterized in that it includes a unit (4) intended to operate the stretching apart of a side (50) of a tire fitted partially over a rim (2) being fixed to said platform (1), in order to facilitate the positioning of the insert (6), and comprises a presser (7) intended to press a side (50) of the tire (5) after the introduction of the insert (6).

## Description

The present invention relates to an apparatus for mounting tyres with antipuncture inserts.

The antipuncture inserts for tires, such as those described in the patents IT-1.263.094 and IT-1.269.109 are intended for insertion within the space between the wheel rim and tire casing, so as to take up a substantial portion of the space between these two elements. The positioning or "mounting" of the inserts by means of traditional tire-mounting machines is very difficult and time-consuming, which is incompatible with mass production requirements. The difficulties are even more numerous in case the inserts consist of one annular element. Also difficult is the mounting of inserts in a plurality of separate pieces.

The main object of the present invention is to overcome the said drawback.
This result has been achieved, according to the invention, by providing an apparatus having the characteristics disclosed in the claim 1. Further characteristics being set forth in the dependent claims.

The present invention makes it possible to position the antipuncture inserts between the rim and the tire in a very short time thereby allowing mass production of tires provided with antipuncture insert, even if the latter consists of more separate elements forming a single annular element. Moreover, an apparatus according to the invention is simple to make, cost-effective, easy to use and reliable also after a prolonged service life.

These and other advantages and characteristics of the invention will be best understood by anyone skilled in the art from a reading of the following description in conjunction with the attached drawings given as a practical exemplification of the invention, but not to be considered in a limitative sense, wherein:
- Figs. 1, 2 and 3 show a possible embodiment of an apparatus according to the present invention, in three different operating configurations wherein some common parts are not represented in all of them for the sake of simplicity;

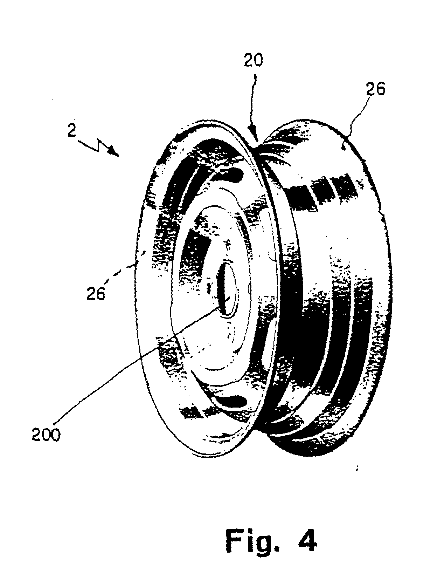

- Fig. 4 is a schematic perpsective representation of a traditional rim for tires;
- Fig. 5 shows an embodiment alternative with respect to Figs. 1-3;
- Fig. 6 shows a further view of an apparatus according to the invention;
- Fig. 7 shows a further modified embodiment.

Reduced to its basic structure, and reference being made to the figures and the attached drawings, an apparatus according to the invention is intended to cooperate with a turning platform such as the one of a tire-mounting machine of traditional type. The said machine comprises a turning platform (1) upon which the rim (2) can be retained by means of suitable clamps (100). The latter are associated with an operator-controlled pneumatic actuator (not shown in the drawings). The tire-mounting machine comprises means for engaging the tire with the rim, the said means consisting of a device with a rod (3) provided with a tire-pushing nail or wedge (30). The tire-pushing nail (30) can be disposed in a manner known per se between the tire heel and the rim shoulder. The tire-mounting machine will not be described herein in greater details as being commonly available on the market.

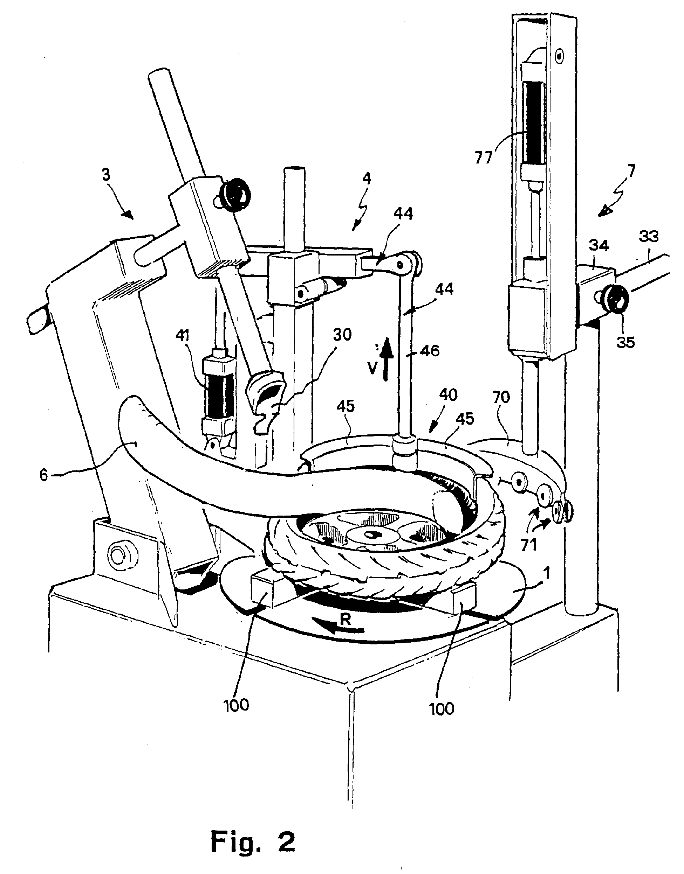

The present apparatus comprises a spreader arm (4) intended to stretch apart the tire (5) laterally in order to facilitate the introduction of the antipuncture insert (6) into the space between the rim (2) and the tire (5). The said insert (6) can be of traditional type consisting of a single, substantially cylindrical body of compressible material, that is, of a type illustrated in Fig. 2. Alternatively, the antipuncture insert may be made of more separate elements which, when positioned between the tire and the rim, take up the same annular configuration as the one-piece inserts. Also alternatively, the insert may consist of one moulded element of annular shape.

The apparatus also comprises a pusher or presser (7) intended to press a corresponding side of the tire (5) subsequently to the positioning of the insert (6).

Advantageously, according to the invention, the said spreader (4) includes an arched portion (40) with C-like cross-section to engage the tire (5) on two sides in contact with the heel (50). The concavity of the "C" is made to face outwardly to allow the heel (50) of the tire (5) to slide freely therein. The said portion (40) of the spreader (4) is interlocked, via a suitable kinematic connection (44), with an operator-controlled pneumatic actuator (41).

Advantageously, the arcuate portion (40) of said spreader (4), whose profile corresponds substantially to the inner curvature of the tire (5), may consist of two elements (45) hinged on each other about a vertical axis (46) of said mechanism (44); this feature allows reducing the bulkiness of the same spreader during certain operating steps to be described later. The arcuate portion (40) of the spreader (4) can be displaced at least vertically in the direction indicated by (V) in Fig. 2. Moreover, it can be driven close to or away from the position taken up by the tire on platform (1), that is, it can be brought close to the heel (50) of the tire (5) (and be moved away therefrom).

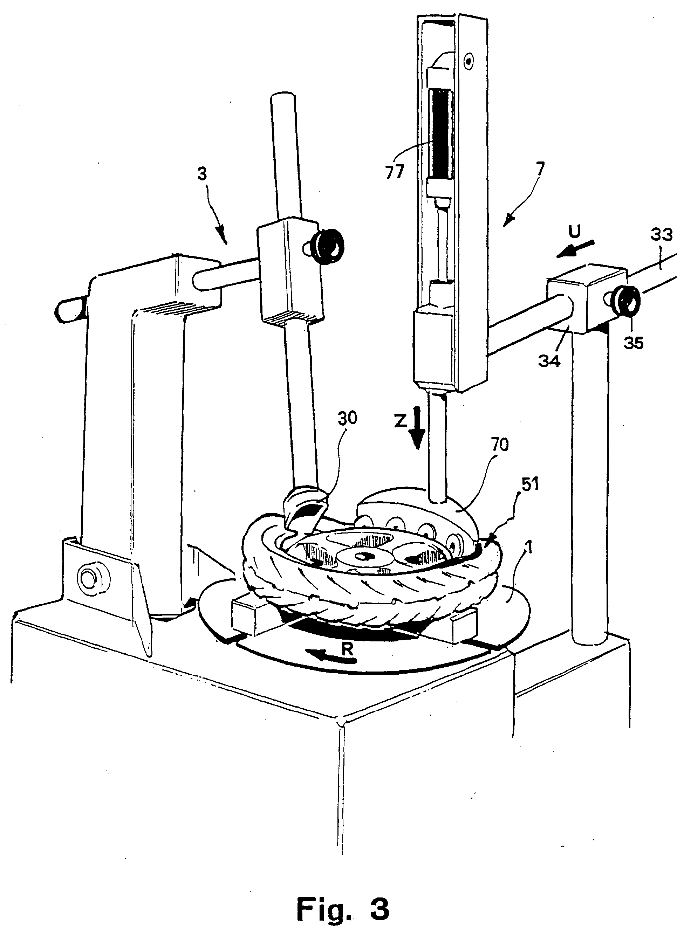

Again, also said pusher (7) can be advantageously provided with an arcuate portion (70). Such portion of the pusher (7) is equipped with rollers (71) disposed in such a manner as to follow substantially the curved profile of the side of the tire. The pusher (7) is associated with an operator-controlled pneumatic actuator (77). In addition, said pusher can be driven according to the directions indicated by (Z) and (U) in Fig. 3; in practice, it can be moved vertically and radially with respect to the tire (5) which is fixed on the turning platform (1) of the tire-mounting machine.

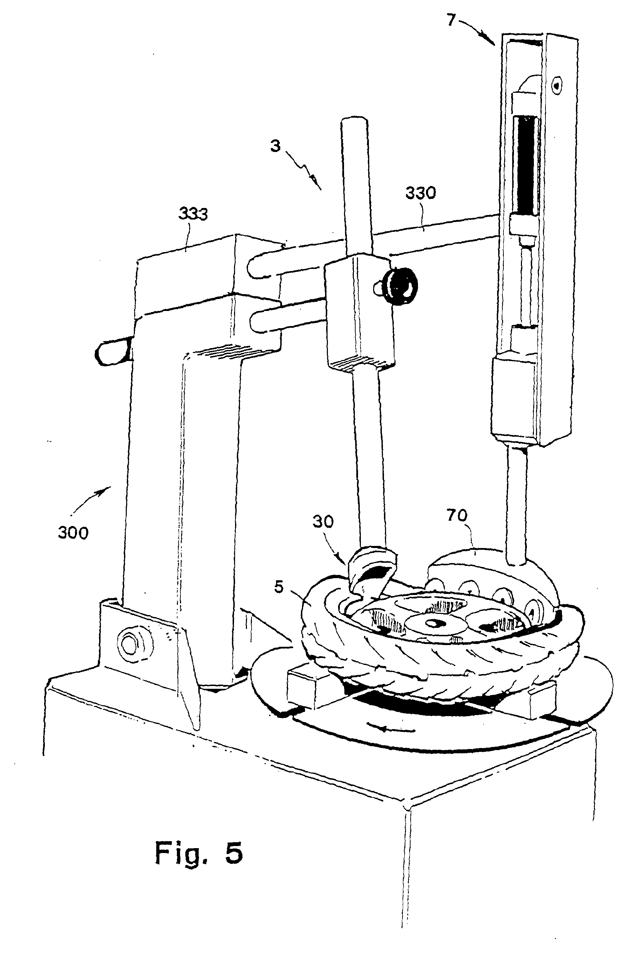

As illustrated in Fig. 5, the pusher unit (7) can be engaged with the structure (300) of the tire-pushing nail (3) by means of a connecting rod (330). Advantageously, the position of unit (7) is adjustable. To this end, the same unit is mounted solid to a rod (33; 300) going through a support block (34; 333) provided with a tightening knob (35). In Fig. 5, the said knob is not shown.

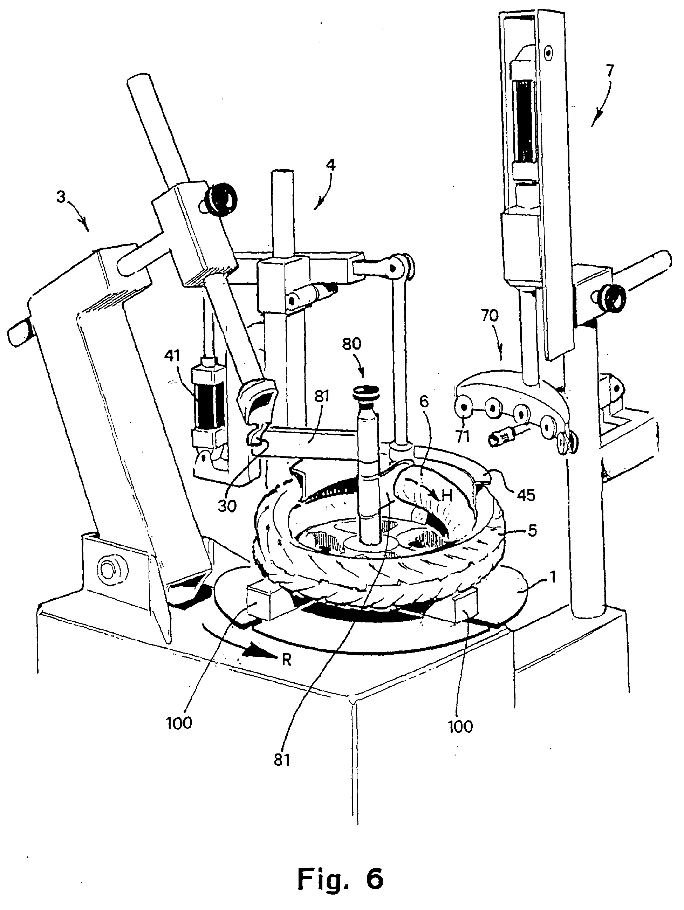

Advantageously, according to the invention and reference being made to Fig. 6 of the attached drawings, the present apparatus includes a device consisting of a rod (80) able to be inserted into the central hole (200) of the rim (2) mounted on platform (1): said rod (80) being provided with two wings (81) angularly spaced apart of a predetermined value (180°, for example). The said wings (81) may be made of metal and be welded to the rod (80) which may also be metal. The diameter of the rod (80) is such as to allow the latter to be inserted with clearance (and thus with the possibility of a free rotation thereof about its longitudinal axis) into the central hole (200) of the rim (2). The operation of the present apparatus will be described later on.

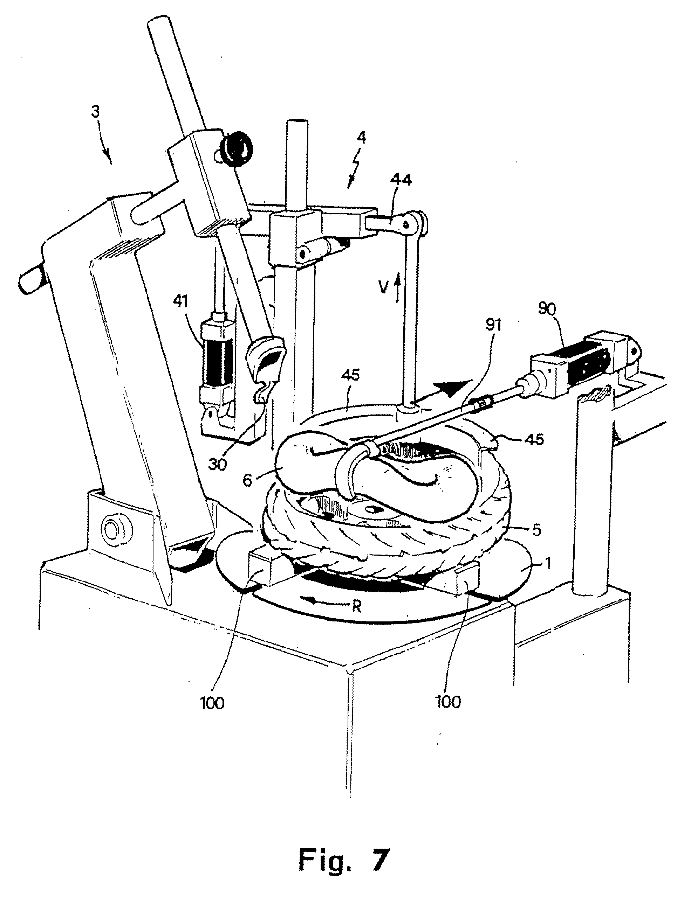

According to the example of Fig. 7, the present apparatus includes a pneumatic actuator (90) to the stem of which a rod (91) is anchored having its free end bent substantially like an "L" or a hook. Said actuator (90) can be engaged with the unit (4) or other stationary part of the apparatus. The operation is as follows.

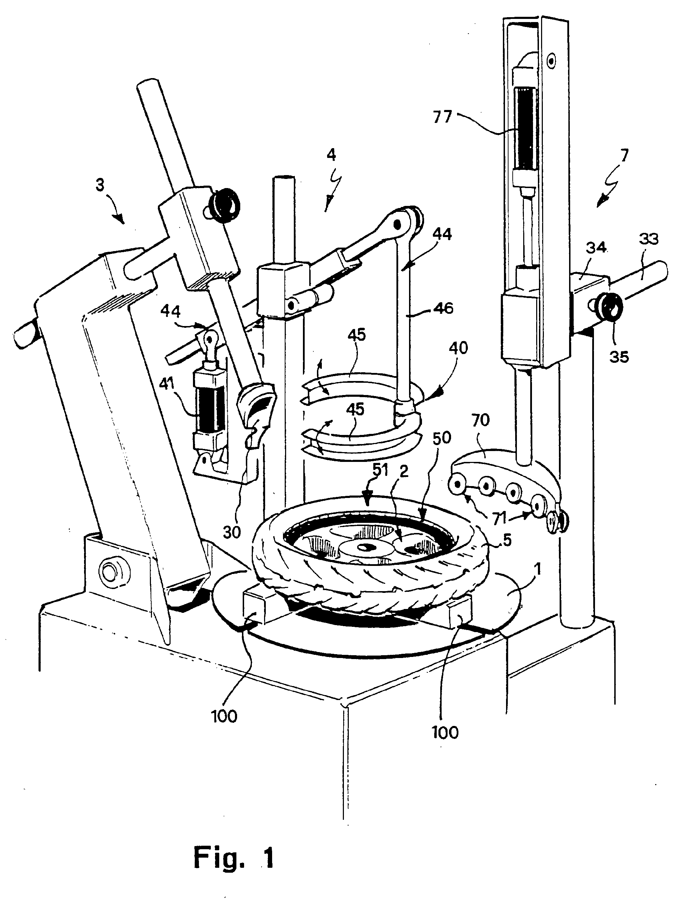

The above described system, for a one-piece antipuncture insert as shown in Fig. 2, can be used as follows.
Firstly, a rim (2) is fixed onto the platform (1) and is associated in a traditional manner with the tire, which results thus oriented downwards, that is, toward the platform (1). Subsequently, the arch (40) is positioned at the height of the upper heel (50) of the tire, after having manually adjusted the mutual position of elements (45) so that the arch (40) takes up a configuration corresponding as a whole to the tire's curvature, as shown in Fig. 1. The insertion of the arcuate portion below the tire's upper heel is made easier by the fact that the two elements (45) can be held in the configuration of reduced bulkiness shown in Fig. 1. Afterwards, the actuator (41) is operated so as to lift the arcuate portion (40) together with the corresponding portion of the tire (5) which, as already set forth, results retained by the clamps (100) of platform (1), thereby obtaining the desired stretching apart configuration. At this point, the antipuncture insert (6) is introduced within the space between the rim (2) and the tire (5). During this step, the platform (1) is rotated (clockwise, as indicate by R in the drawings) and the tire's heel slides within the arch (40). After having introduced by hand the insert (6) completely into the space existing between the rim and the tire, the arms (45) of the spreader (40) are repositioned in the configuration of reduced bulkiness. Then, the arch (40) of unit (4) is moved away from the tire (5), the rod (3) is lowered by means of the tire-pushing nail (30) and the presser (7) is activated, the latter being disposed downstream of unit (4), with respect to the direction of rotation of the tire. As already indicated, the tire-pushing nail (30) acts between the shoulder (26) of rim (2) and the heel (50) in order to fit the latter inside the rim (2). The presser (7) presses the tire's side (51), and the pressure is such as to force the corresponding heel (50) to place itself at he height of the central channel or groove (20) of the rim (2). Also during this step, the platform (1) rotates, and the nail (30) of the tire-mounting machine is lowered in its operating condition. Upon completion of a revolution, the nail (30) moves spontaneously clear of the rim/tire assembly, likewise in the traditional mounting of tires. At this point, the presser (7) is disposed in the starting lifting position, so that the pressure exerted internally by the no-longer-compressed insert (6) determines the spontaneous positioning of the upper heel (50) of tire (5) against the shoulder (26) of rim (2). The finished pneumatic is then manually unloaded from the tire-mounting machine after having operated the re-positioning of clamps (100) in the stand-by position, that is, of release of tire (2), and the cycle can be repeated.

For an insert (6) consisting of a plurality of pieces, the operation is possibly the following. The rod (80) is fitted into the hole (200) of rim (2), with one wing (81) abutting against the riser of unit (4) as illustrated in Fig. 6. Afterwards, once the side of tire (5), together with the spreader (40), is lifted as described above, the pieces of the insert are positioned one after the other in the space between the tire (5) and the rim (2), while the platform (1) rotates as indicated by the arrow (R). The pieces of the insert are inserted by a movement opposite to that (R) of platform (1). The head of the last piece of the antipuncture insert projects outwardly and intercepts the wing (81) opposite the one resting against the raiser of unit (4). Since the rim (2) rotates along with tire (5), whereas the assembly (80, 81) cannot, the said last piece of the insert is made to deform (arrow "H") of Fig. 6) by moving away from the tire and going fully (and thus also with the head portion which was initially projecting outwardly) into the space between the tire and the rim. The next steps correspond to those described with reference to Figs. 1-3.

When it is desired to mount an antipuncture insert consisting of one annular element, the procedure is as follows.

After having lifted the side of the tire (5) together with the spreader (40), a portion of the insert (6) is positioned between the rim (2) and the tire (5). Then, the opposite part of the insert (6) is engaged with the free end of the rod (91), and the actuator (90) is activated to retract the rod and deform temporarily the insert (6), as illustrated in Fig. 7, until the whole of the insert results held within the inner circumference of the tire (5). At this point, the operator simply moves manually the insert (6) by disengaging it from the rod (91), and proceeds as indicated with reference to Figs. 1-3.
In practice, the embodiments exemplified in Figs. 6 and 7 of the attached drawings make it possible to overcome the difficulties encountered in mounting the insert, owing to the rigidity of the latter, by causing the same insert (or its elements when in more pieces) to deform temporarily to allow the mounting thereof in a fully simple and safe manner. Practically, all the construction details may vary in any equivalent way as far as the shape, dimensions, elements disposition, nature of the used materials are concerned, without nevertheless departing from the scope of the adopted solution idea and, thereby, remaining within the limits of the protection granted to the present patent for industrial invention.

## Claims

**1.** Apparatus for mounting tyres with antipuncture inserts, to be used for providing a tire (5) with an antipuncture insert (6) and intended to cooperate with a turning platform (1) having means for fixing a rim and means (3, 30) for associating a tire (5) with the rim (2) being fixed to the platform (1), apparatus **characterized in that** it includes a unit (4) intended to operate the stretching apart of a side (50) of a tire fitted partially over a rim (2) being fixed to said platform (1), in order to facilitate the positioning of the insert (6), and comprises a presser (7) intended to press a side (50) of the tire (5) after the introduction of the insert (6).

**2.** Apparatus for mounting tyres with antipuncture inserts, to be used for providing a tire (5) with an antipuncture insert (6) and intended to cooperate with a turning platform (1) having means for fixing. a rim and means (3, 30) for associating a tire (5) with the rim (2) being fixed to the platform (1), apparatus comprising a unit (4) intended to operate the stretching apart of a side of a tire (5) fitted partially over a rim (2) being fixed to said platform (1), in order to facilitate the positioning of the insert (6), and comprising a presser (7) intended to press a side (50) of the tire (5) after the introduction of the insert (6), **characterized in that** it includes means (80, 81; 90, 91) to impose a temporary deformation on the insert (6) being partially introduced into the tire and driven into rotation by said platform (1).

**3.** Apparatus according to claim 1 or 2, **characterized in that** said unit (4) intended to operate the said stretching apart includes an arcuate portion (40) suitable for insertion within the tire to lift a side (50) thereof, that is, to increase the space between the tire (5) and the rim (2) for the introduction of the insert (6) therein.

**4.** Apparatus according to claim 3, **characterized in that** said arcuate portion (40) consists of two elements (45) connected to each other so as to take up a configuration of reduced bulkiness.

**5.** Apparatus according to claim 3, **characterized in that** said unit (4) is associated with driving means (41, 44) suitable for moving said arcuate portion (40) close to and away from the position taken up by the tire on the platform (1).

**7.** Apparatus according to claim 1 or 2, **characterized in that** said presser (7) has an arcuate portion (70) provided with rollers (71) intended to come in contact with a side (51) of the tire.

**8.** Apparatus according to claim 7, **characterized in that** said rollers (71) are disposed along a curve corresponding to the curvature formed by the tire (5).

**9.** Apparatus according to claim 1 or 2, **characterized in that** said presser (7) is associated with a pneumatic actuator (77).

**10.** Apparatus according to claim 1 or 2, **characterized in that** said presser (7) is associated with driving means suitable for moving it orthogonally and parallel to the plane defined by the tire (5) onto the turning platform (1).

**11.** Apparatus according to claim 1 or 2, **characterized in that** said means (3, 30) for associating the tire with the rim are disposed upstream of said presser (7) with respect to the direction of rotation (R) of said turning platform (1).

**12.** Apparatus according to claim 2, **characterized in that** the said means comprise a rod (80) which can be inserted idle within the central hole (200) of the rim (2): said rod (80) being provided with two wings (81) angularly spaced of a predetermined extent.

**13.** Apparatus according to claim 12, **characterized in that** said wings (81) are positioned diametrally opposite, that is, spaced apart by 180°.

**14.** Apparatus according to claim 2, **characterized in that** said means for temporary deformation of the insert (6) comprise an actuator (90) engaged with a stationary part of the apparatus and having its stem engaged by a rod (91): the end of said rod (91) intended to temporarily hook a portion of the insert (6).
